# EUROPÄISCHE PATENTSCHRIFT

(11) **EP 3 706 530 B1**
(45) Veröffentlichungstag und Bekanntmachung des Hinweises auf die Patenterteilung: **01.12.2021**
(21) Anmeldenummer: 18806995.9
(22) Anmeldetag: 09.11.2018
(51) Int. Cl.: A01B 59/06, A01B 71/06

(54) **ANTRIEBSWELLENVERBINDUNGSVORRICHTUNG**
DRIVE SHAFT CONNECTING UNIT
DISPOSITIF DE LIAISON D'ARBRE DE TRANSMISSION

(30) Priorität: 10.11.2017 DE 102017126497
(43) Veröffentlichungstag der Anmeldung: 16.09.2020
(73) Patentinhaber: SYN TRAC GmbH, 4822 Bad Goisern a.H. (AT)
(72) Erfinder: PUTZ, Stefan, 4822 Bad Goisern (AT)
(74) Vertreter: HGF
(86) Internationale Anmeldenummer: PCT/EP2018/080821
(87) Internationale Veröffentlichungsnummer: WO 2019/092208

(56) Entgegenhaltungen:
- EP-A1- 3 011 816
- WO-A1-90/02481
- DE-A1- 4 132 889
- KR-A- 20160 011 960
- US-A- 4 733 738

## Beschreibung

Die vorliegende Erfindung betrifft eine Antriebswellenverbindungsvorrichtung mit einer fahrzeugseitigen und einer anbaugeräteseitigen Antriebswellenverbindungseinrichtung.

Eine Antriebswelle ist ein Bauteil, welches der Kraftübertragung zwischen einem Getriebe und zumindest einem angetriebenen Rad dient und ist ein Teil eines Antriebsstrangs. Um Einfederungsbewegungen und dem Lenkeinschlag folgen zu können, sind Gelenke vorhanden, weshalb auch der Oberbegriff Gelenkwelle verwendet wird. Für gelenkte Räder werden jedoch speziell homokinetische Gelenkwellen verwendet.

Eine Kardanwelle ist eine Ausführung einer Gelenkwellenkombination mit einem oder zwei Kreuzgelenken (auch Kardangelenke genannt). Sie ermöglicht eine DrehmomentÜbertragung in einem geknickten Wellenstrang. Der Knickwinkel darf sich im Betrieb verändern.

Aus dem Stand der Technik ist es bekannt sogenannte Zapfwellen miteinander zu verbinden. Zapfwellen sind Antriebswellen eines landwirtschaftlichen Gerätes, welche einen Teil der Motorenergie durch Kopplung auf entsprechende Wellen eines Anbaugerätes, z.B. eines Futtermischwagens, einer Fräse oder eines Mulchers zu übertragen. Hierzu wird das Anbaugerät zunächst mechanisch an das landwirtschaftliche Fahrzeug gekoppelt und anschließend eine Kopplung der Zapfwellen miteinander vorgenommen. Zapfwellen sind hierbei Wellen die üblicherweise mit zwei festen Drehzahlen betrieben werden können, wobei üblicherweise eine Heckzapfwelle getriebeseitig abgeht während eine Frontzapfwelle üblicherweise motorseitig abgeht, wobei die Frontzapfwelle üblicherweise lediglich 30% der Leistung aufweist, die eine Heckzapfwelle entwickeln kann.

Darüber hinaus ist es bekannt, auch sogenannte Wegzapfwellen vorzusehen. Wegzapfwellen sind Zapfwellen, die mit dem Antriebsstrang eines Anbaugeräts mit Rädern gekoppelt werden, wobei eine Wegzapfwelle hierbei ebenfalls feste Drehzahlen besitzt und lediglich eine Traktionsunterstützung für Anbaugeräte bei Böden darstellt, auf denen auch das Anbaugerät den Vortrieb unterstützen muss. Das Dokument EP3011816A offenbart eine Antriebswellenverbindungseinrichtung gemäss dem Oberbegriff des Anspruchs 1.

Aufgabe der Erfindung ist es, einen flexibel koppelbaren modularen Antrieb eines Fahrzeugs zu schaffen, mit dem es möglich ist, automatisiert und in einfacher Weise unterschiedliche Antriebsmodifikationen und Achsmodifikationen darzustellen.

Die Aufgabe wird mit einer Vorrichtung mit den Merkmalen des Anspruchs 1 gelöst. Vorteilhafte Weiterbildungen sind in Unteransprüchen gekennzeichnet.

Es ist eine weitere Aufgabe der Erfindung, Antriebswellenverbindungseinrichtungen zu schaffen, mit denen als Teil der Antriebswellenverbindungsvorrichtung dieselben auf einfache Weise miteinander koppelbar sind.

Diese Aufgabe wird durch die Merkmale der Ansprüche 9 und 10 gelöst. Vorteilhafte Weiterbildungen sind in den jeweils abhängigen Unteransprüchen angegeben.

Erfindungsgemäß ist zur Ermöglichung einer modularen Antriebs- und Achsanordnung eine Antriebswellenverbindungsvorrichtung vorgesehen, wobei die Antriebswellenverbindungsvorrichtung aus zwei Antriebswellenverbindungseinrichtungen besteht, wobei die Antriebswellenverbindungseinrichtungen einmal fahrzeugseitig vorgesehen sind und einmal an einer Anbaueinheit wie eine Achse oder einem Anhänger vorgesehen sind.

Hierbei sind diese Einrichtungen jeweils an einer Einrichtung zum Koppeln eines Fahrzeuges und einer Anbaueinrichtung, wie einem Anhänger, einer Zusatzachse oder einem Anbaugerät vorgesehen und hierbei mit diesen axial so festgelegt verbunden, dass bei einer mechanischen Kopplung des Fahrzeuges mit einer Zusatzachse und/oder einem Anhänger und/oder einem Anbaugerät die Antriebswellenverbindungseinrichtungen miteinander zwangsgekoppelt werden. Somit kann flexibel, schnell und in einfacher Weise eine Modifikation vorgenommen werden.

Eine solche Zwangskoppelung ist im Stand der Technik nicht vorgesehen, weil dort bislang eine Kopplung mit zusätzlichen Achsen oder zusätzlichen Anbaugeräten nicht in der Weise geschah, dass eine Antriebs-Wirkverbindung herbeigeführt werden konnte.

Die entsprechenden Verbindungseinrichtungen sind hierbei jeweils so an ihrem jeweiligen Kopplungselement festgelegt, dass beim Ineinanderschieben der Kopplungselemente diese Teile zwangsverbunden werden. Hierbei greift insbesondere eine Innenverzahnung einer Verbindungseinrichtung in die Außenverzahnung einer anderen Verbindungseinrichtung, so dass durch axiales Ineinanderschieben die kraftschlüssige Kopplung erfolgt. Die Festlegung in axialer Richtung erfolgt hierbei allein durch die Kopplungselemente.

Eine erfindungsgemäße fahrzeugseitige Antriebswellenverbindungseinrichtung umfasst einen Lagersitz und eine darin drehbar gelagerte Kupplungsnabe, wobei der Lagersitz zweigeteilt ausgebildet ist und einen fahrzeugseitigen Verbindungsflansch und einen kopplungsseitigen Abschlussdeckel aufweist.

Der rohrförmige Verbindungsflansch besitzt einen Befestigungsabschnitt und einen Lagerungsabschnitt, wobei der Befestigungsabschnitt fahrzeugseitig an einer äußeren Mantelwandung radial umlaufend eine Zentrierschulter zum Zentrieren der fahrzeugseitigen Antriebswellenverbindungseinrichtung bzgl. einer Kopplungseinrichtung oder eines Fahrzeuges und einen in etwa kreisringförmigen Verbindungsmittelabschnitt zum Verbinden der fahrzeugseitigen Antriebswellenverbindungseinrichtung mit einer Kopplungseinrichtung oder mit einem Fahrzeug aufweist.

Der Befestigungsabschnitt bildet einen kopplungsseitigen Teil eines Lageraufnahmesitzes aus, der eine radial umlaufende Schulter aufweist.

Der Abschlussdeckel ist mit dem Verbindungsflansch mittels entsprechender Verbindungsmittel verbunden, wobei der Abschlussdeckel einen fahrzeugseitigen Teil eines Lageraufnahmesitzes ausbildet der eine radial umlaufende Schulter und kopplungsseitig eine Durchgangsöffnung für die Kupplungsnabe aufweist und wobei im Lageraufnahmesitz eine Lagerungseinrichtung angeordnet ist über die die Kupplungsnabe im Lagersitz drehbar gelagert ist.

Die Lagerungseinrichtung ist mit einer Mantelwandung eines rohrförmigen fahrzeugseitigen Antriebswellenaufnahmeabschnitts mit der Kupplungsnabe verbunden.

Der Antriebswellenaufnahmeabschnitt besitzt eine Innenverzahnung zum Verbinden mit einer korrespondierend ausgebildeten Außenverzahnung einer Antriebswelle eines Fahrzeuges und die Kupplungsnabe kopplungsseitig einen napfförmigen Kopplungsabschnitt mit einer Innenverzahnung zum Verbinden mit einem korrespondierend ausgebildeten Element der anbaugeräteseitigen Antriebswellenverbindungseinrichtung.

Eine erfindungsgemäße anbaugeräteseitige Antriebswellenverbindungseinrichtung umfasst einen napfförmigen Lagersitz, ein Kuppelstück und eine Lagerungswelle, wobei der Lagersitz einen in etwa kreisringförmigen Verbindungsmittelabschnitt zum Verbinden der anbaugeräteseitigen Antriebswellenverbindungseinrichtung mit einer Kopplungseinrichtung oder mit einem Anbaugerät aufweist und wobei in einer Durchgangsöffnung an einem anbaugeräteseitigen Ende der Lagerungseinrichtung ein Lageraufnahmeabschnitt ausgebildet ist, der anbaugeräteseitig von einer radial umlaufenden Schulter begrenzt ist und im Lageraufnahmeabschnitt einer Lagerungseinrichtung angeordnet ist, wobei in der Lagerungseinrichtung die Lagerungswelle drehbar gelagert ist, die mit einem an ihrer äußeren Mantelwandung ausgebildeten Lagerabschnitt mit der Lagerungseinrichtung verbunden ist, und wobei die Lagerungswelle anbaugeräteseitig einen Wellenstumpf mit einer Außenverzahnung zum Verbinden mit einer Antriebswelle eines Anbaugerätes aufweist, und wobei die Lagerungswelle kopplungsseitig eine napfförmige Kuppelstückaufnahme aufweist, wobei die napfförmige Kuppelstückaufnahme an ihrer äußeren Mantelwandung eine radial umlaufende Schulter aufweist, die den Lageraufnahmeabschnitt begrenzt, und wobei das Kuppelstück in der napfförmigen Kuppelstückaufnahme der Lagerungswelle angeordnet und mittels einer Schraubenverbindung fixiert ist, und wobei das in etwa zylindrische Kuppelstück kopplungsseitig eine Außenverzahnung zum Koppeln mit der korrespondierend ausgebildeten Innenverzahnung der Kupplungsnabe aufweist.

Zwischen den Lagerungseinrichtungen und den entsprechenden Schultern in den Lageraufnahmeabschnitten können Tellerfedern vorgesehen sein, um die Lagerungseinrichtungen vor Beschädigungen zu schützen.

Zwischen der Lagerungseinrichtung und dem Abschlussdeckel der fahrzeugseitigen Antriebswellenverbindungseinrichtung können Wellendichtringe angeordnet sein.

Wellendichtringe können auch zwischen der napfförmigen Lagerungswelle und dem Lagersitz der anbaugeräteseitigen Antriebswellenverbindungseinrichtung vorgesehen sein.

Im Rahmen der vorliegenden Erfindung wird unter dem Ausdruck "fahrzeugseitig" ein Ende bzw. ein Bereich bzw. eine Seite eines Bauteils bezeichnet, die in Richtung eines Fahrzeugs in Längsrichtung weist.

Im Rahmen der vorliegenden Erfindung wird unter dem Ausdruck "anbaugeräteseitig" ein Ende bzw. ein Bereich bzw. eine Seite eines Bauteils bezeichnet, die in Richtung eines Anbaugeräts in Längsrichtung weist.

Als kopplungsseitiges bzw. verbindungsseitiges Ende wird ein Bereich bzw. eine Seite eines Bauteils bezeichnet, die in Richtung eines Kopplungs- bzw. Verbindungsbereiches einer Kopplungsvorrichtung bzw. einer Dockingvorrichtung weist.

Die erfindungsgemäße Antriebswellenverbindungsvorrichtung wird beispielhaft anhand einer Zeichnung beschrieben. Es zeigen dabei:
- Figur 1:: eine perspektivische Darstellung einer Dockingaufnahme,
- Figur 2:: eine seitliche Draufsicht auf die Dockingaufnahme,
- Figur 3:: eine Draufsicht von vorne auf die Dockingaufnahme,
- Figur 4:: eine Draufsicht von oben auf die Dockingaufnahme,
- Figur 5:: eine perspektivische Darstellung eines Dockingeinschubes,
- Figur 6:: eine Draufsicht von vorne auf den Dockingeinschub,
- Figur 7:: eine seitliche Draufsicht auf den Dockingeinschub,
- Figur 8:: eine Draufsicht von oben auf den Dockingeinschub,
- Figur 9:: eine perspektivische Teil-Explosionsdarstellung einer Keilgabel mit Hydraulikzylinder und einer Verriegelungseinrichtung,
- Figur 10:: eine weitere perspektivische Teil-Explosionsdarstellung der Keilgabel mit Hydraulikzylinder und der Verriegelungseinrichtung,
- Figur 11:: eine perspektivische Explosionszeichnung einer Kupplungsplatte und einer Dockingaufnahme,
- Figur 12:: eine perspektivische Explosionszeichnung einer weiteren Kupplungsplatte und eines Dockingeinschubes,
- Figur 13:: eine seitlich geschnittene Darstellung einer erfindungsgemäßen Antriebswellenverbindungsvorrichtung in einem gekoppelten Zustand,
- Figur 14:: ein Schnitt entlang einer Ebene C-C durch die Antriebswellenverbindungsvorrichtung gemäß Figur 13, und
- Figur 15:: eine perspektivische Explosionsdarstellung der Antriebswellenverbindungsvorrichtung.

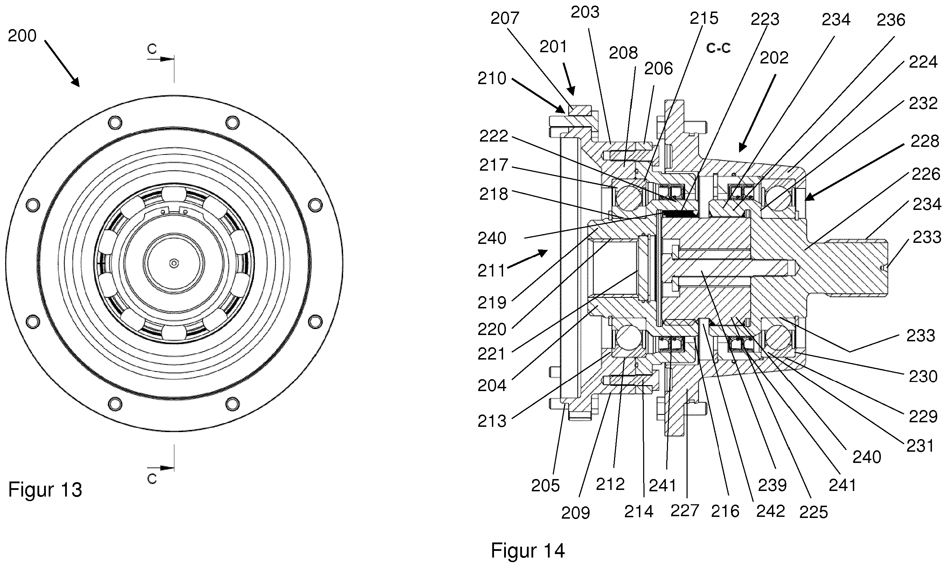

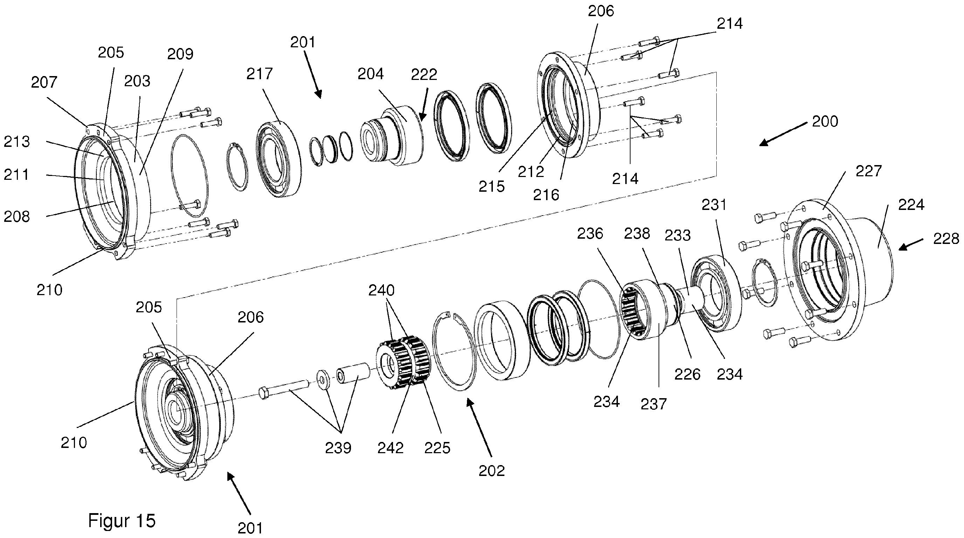

Im Folgenden wird eine erfindungsgemäße Antriebswellenverbindungsvorrichtung 200 anhand eines Ausführungsbeispiels beschrieben (Figuren 13 bis 15).

Die Antriebswellenverbindungsvorrichtung 200 umfasst eine erfindungsgemäße fahrzeugseitige Antriebswellenverbindungseinrichtung 201 und eine damit lösbar kraftschlüssig verbind- und koppelbare, anbaugeräteseitige Antriebswellenverbindungseinrichtung 202 (Figuren 13 bis 15).

Die fahrzeugseitige Antriebswellenverbindungseinrichtung 201 umfasst einen Lagersitz 203 und eine darin drehbar gelagerte Kupplungsnabe 204.

Der Lagersitz 203 ist vorzugsweise Bestandteil der fahrzeugseitigen Antriebswellenverbindungseinrichtung 201 und ist vorzugsweise mittels einer Schraubverbindung mit einer Dockingaufnahme 31 eines Fahrzeugs verbunden. Alternativ kann der Lagersitz auch mittels einer Schweißverbindung mit der Dockingaufnahme 31 verbunden sein.

Der Lagersitz 203 ist zweigeteilt ausgebildet und weist einen fahrzeugseitigen Verbindungsflansch 205 und einen kopplungsseitigen Abschlussdeckel 206 auf.

Der in etwa rohrförmige Verbindungsflansch 205 weist einen Befestigungsabschnitt 207 und einen Lagerungsabschnitt 208 auf.

Der Befestigungsabschnitt 207 ist fahrzeugseitig an einer äußeren Mantelwandung 209 des Verbindungsflansches 205 angeformt und in etwa kreisringförmig ausgebildet.

An dem fahrzeugseitigen Ende des Verbindungsflansches 205 ist radial umlaufend eine Zentrierschulter 210 zum Zentrieren der fahrzeugseitigen Antriebswellenverbindungseinrichtung 201 bezüglich einer Kopplungseinrichtung, vorzugsweise einer Dockingaufnahme 31, ausgebildet.

Der Befestigungsabschnitt 207 bildet kopplungsseitig in seiner Durchgangsöffnung 211 einen Teil eines Lageraufnahmesitzes 212 aus und weist in diesem Bereich eine radial umlaufende Schulter 213 auf.

Der Abschlussdeckel 206 ist mit dem Verbindungsflansch 205 mittels entsprechender Verbindungsmittel, vorzugsweise Schraubverbindungen 214, verbunden.

Weiterhin bildet der Abschlussdeckel 206 fahrzeugseitig einen Teil eines Lageraufnahmesitzes 212 aus. Dieser Teil des Lageraufnahmesitzes 212 ist durch eine radial umlaufende Schulter 215 begrenzt, wobei im Abschlussdeckel 206 kopplungsseitig eine Durchgangsöffnung 216 für die Kupplungsnabe 204 vorgesehen ist.

Im Lageraufnahmesitz 212 ist eine Lagerungseinrichtung 217, wie z. B. ein ein- oder zweireihiges Kugellager 217 angeordnet. Über diese Lagerungseinrichtung 217 ist die Kupplungsnabe 204 in den Lagersitzen 203, 212 drehbar gelagert.

In der Lagerungseinrichtung 217 ist eine Mantelwandung eines rohrförmigen fahrzeugseitigen Antriebswellenaufnahmeabschnitts 219 der Kupplungsnabe 204 angeordnet.

Der Zapfwellenaufnahmeabschnitt 219 ist rohrförmig ausgebildet und weist eine Innenverzahnung 220 zum Verbinden mit einer korrespondierend ausgebildeten Außenverzahnung einer Antriebswelle (nicht dargestellt) eines Fahrzeugs (nicht dargestellt) auf.

An seinem fahrzeugseitigen Ende ist der Zapfwellenaufnahmeabschnitt 219 mit einer Dichtscheibe 221 verschlossen, um einen Austritt von Achsöl zu verhindern.

Kopplungsseitig weist die Kupplungsnabe 204 einen napfförmigen bzw. hohlzylindrischen Kopplungsabschnitt 222 mit einer Innenverzahnung 223 zum Verbinden mit einem korrespondierend ausgebildeten Element der anbaugeräteseitigen Antriebswellenverbindungseinrichtung 202 auf.

Die Innenverzahnung 223 ist hierbei derart ausgebildet, dass die Zähne zu den kopplungsseitigen Stirnflächen hin axial angeschrägt oder zumindest mit Fasen ausgebildet sind, so dass die Zähne kopplungsseitig zum inneren des hohlzylindrischen Kopplungsabschnitts 222 Findungstrichter für eine einzuschiebende Innenverzahnung bilden, so dass eine Innenverzahnung, welche hier später noch beschrieben wird, an den angespitzten Flächen der Zähne, bzw. den Fasen der Zähne der Innenverzahnung entlang gleitet und somit ein außenverzahnter Innenstumpf in den hohlzylindrischen Kopplungsabschnitt 222 und die Verzahnungen ineinander gleiten, wobei gegebenenfalls antriebsseitig oder abtriebsseitig entkoppelt ist, so dass zumindest eines der eine Verzahnung aufweisenden Kopplungselemente frei in das andere eingedreht werden kann.

Die anbaugeräteseitige Antriebswellenverbindungseinrichtung 202 umfasst einen napfförmigen bzw. hohlzylindrischen Lagersitz 224, ein Kuppelstück 225 und eine Lagerungswelle 226.

Der Lagersitz 224 ist mit einem Dockingeinschub 32 mittels einer Schraubverbindung verbunden. Alternativ kann der Lagersitz auch integraler Bestandteil des Dockingeinschubs 32 sein.

Der Lagersitz 224 umfasst einen in etwa kreisringförmigen Verbindungsmittelabschnitt 227 zum Verbinden der anbaugeräteseitigen Antriebswellenverbindungseinrichtung 202 mit dem Dockingeinschub, z. B. mittels entsprechender Schraubverbindungen.

An einem anbaugeräteseitigen Ende des Lagersitzes 224 ist eine Durchgangsöffnung 228 vorgesehen, die einen Lageraufnahmeabschnitt 229 ausbildet. Dieser Lageraufnahmeabschnitt ist anbaugeräteseitig von einer radial umlaufenden Schulter 230 begrenzt.

In diesem Lageraufnahmeabschnitt 229 ist eine Lagerungseinrichtung 231, wie z. B. ein Kugellager, angeordnet.

In der Lagerungseinrichtung 231 ist die Lagerungswelle 226 drehbar gelagert. An ihrer äußeren Mantelwandung ist an der Lagerungswelle 226 ein Lagerabschnitt 232 ausgebildet, der mit der Lagerungseinrichtung 231 verbunden ist.

Anbaugeräteseitig weist die Lagerungswelle 226 einen Wellenstumpf 233 mit einer Außenverzahnung 234 auf, der zum Verbinden mit einer Antriebswelle eines Anbaugeräts vorgesehen ist.

Kopplungsseitig weist die Lagerungswelle 226 eine napfförmige bzw. hohlzylindrische Kuppelstückaufnahme 236 auf. Die Kuppelstückaufnahme 236 weist an ihrer äußeren Mantelwandung 237 radial umlaufend eine Schulter 238 auf, die den Lagerabschnitt 232 begrenzt.

Das Kuppelstück 225 ist in der napfförmigen Kuppelstückaufnahme 236 der Lagerungswelle 226 angeordnet und mittels einer Schraubverbindung 239 fixiert.

Kopplungsseitig weist das zylindrische Kuppelstück 225 eine Außenverzahnung 240 zum Koppeln mit der korrespondierend ausgebildeten Innenverzahnung 223 der Kupplungsnabe 204 auf.

In etwa axial mittig des Kuppelstücks 225 ist eine umlaufende radiale Nut 242 eingebracht, welche die Außenverzahnung 240 in eine kuppelseitige Außenverzahnung 240 und eine Außenverzahnung 242 geteilt ist, welche in der hohlzylindrischen Kuppelstückaufnahme 236 und dort in einer entsprechenden Innenverzahnung 243 ruht. Die axiale Nut 242 schließt in montiertem Zustand des Kuppelstücks 225 in der Kuppelstückaufnahme 236 mit einer axialen Stirnwandung der Kuppelstückaufnahme 236 ab.

Die Außenverzahnung 240 des Kuppelstücks 225 besitzt kopplungsseitig, d.h. in Richtung zu einer Kupplungsnabe 204 vorzugsweise angeschrägte konvergierende Flanken bzw. angefaste Stirnflächen derart auf, dass sich die entsprechenden Zähne axial mit Steuerflächen (nicht gezeigt) verjüngen, so dass beim Koppeln der Antriebswellenverbindungseinrichtung 201 und der Antriebswellenverbindungseinrichtung 202 die Zähne mit den durch die Anschrägungen gebildeten Findungstrichtern ineinander rutschen und ein axiales Aufeinanderstehen der Zähne der Innenverzahnung und der Außenverzahnung hierdurch verhindert wird.

Die vorbeschriebenen Kupplungseinrichtungen 201 und 202 können selbstverständlich auch vertauscht an den entsprechenden Kupplungseinrichtungen des Fahrzeugs und der Anbauachse bzw. des Anbaugeräts vorhanden sein.

Erfindungsgemäß ist es jedoch wesentlich, dass beide Antriebswellenverbindungseinrichtungen 201, 202 jeweils an einer Dockingeinrichtung eines Fahrzeugs bzw. eines Anbaugerätes oder einer Zusatzachse axial fest verbaut sind, so dass bei einer mechanischen Kupplung der Dockingeinrichtungen 31, 32 eine Zwangskopplung der Antriebswellenverbindungseinrichtungen 201 und 202 erfolgt.

Selbstverständlich sind hierzu die Dockingeinrichtungen 31, 32 so genau gefertigt, bzw. die Sitze für die jeweiligen Antriebswellenverbindungseinrichtungen 201, 202 so exakt gefertigt, dass die Antriebswellenverbindungseinrichtungen beim Ineinanderziehen der Kopplungseinrichtungen 31, 32 absolut koaxial bzw. axial fluchtend ausgerichtet sind.

Gegebenenfalls kann zum Ausgleich geringer Toleranzen es vorgesehen sein, zumindest eine der Antriebswellenverbindungseinrichtungen 201, 202 radial mit etwas Spiel, wobei das Spiel gegebenenfalls elastisch abgefangen wird durch einen entsprechenden elastischen Ring und dergleichen, ausgebildet wird, so dass ein geringer Toleranzausgleich möglich ist, um Verspannungen zu vermeiden.

Zwischen den Lagerungseinrichtungen 217, 231 und den entsprechenden Schultern 213, 230 in den Lageraufnahmeabschnitten 229, 212 können Tellerfedern (nicht dargestellt) vorgesehen sein, um die Lagerungseinrichtungen 217, 231 vor Beschädigungen zu schützen.

Weiterhin sind zwischen der Lagerungseinrichtung 217 und dem Abschlussdeckel 206 der fahrzeugseitigen Antriebswellenverbindungseinrichtung Wellendichtringe 241 angeordnet.

Weiterhin sind auch Wellendichtringe 241 zwischen der napfförmigen Lagerungswelle 226 und dem Lagersitz 224 der anbaugeräteseitigen Antriebswellenverbindungseinrichtung 202 vorgesehen.

Der Antriebsstrang lässt sich auch derart erweitern, dass ein Zusatzmotor über eine entsprechende Antriebswellenverbindungsvorrichtung mit dem Antriebsstrang verbunden wird.

Aufgrund des erfindungsgemäßen Dockingsystems kann an der Fahrzeugfront oder am Heck ein Zusatzmotor angekoppelt werden. Die Leistung von Fahrzeug und Zusatzmotor wird summiert und variabel auf Fahrantrieb, Anbaugerät und Nebenantriebe verteilt.

Zapfwellenbetriebene Anbaugeräte können wahlweise an der gegenüberliegenden Dockingaufnahme oder an einer Dockingaufnahme am Zusatzmotormodul angekoppelt werden.

Es ist somit möglich, die gesamte Systemleistung von Fahrzeug und Zusatzmotor über die Zapfwelle an das Anbaugerät abzugeben oder variabel an Anbaugerät, Fahrantrieb und Nebenantrieb zu verteilen.

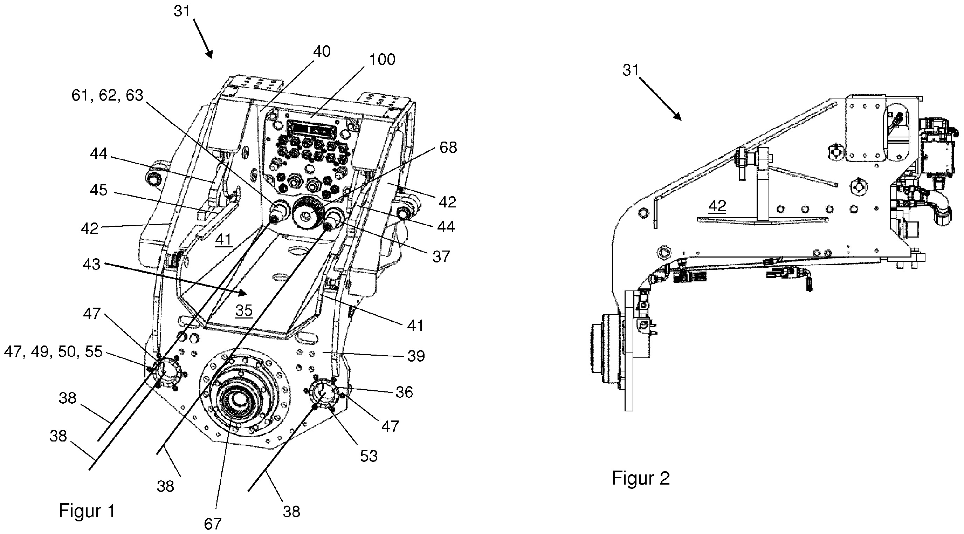

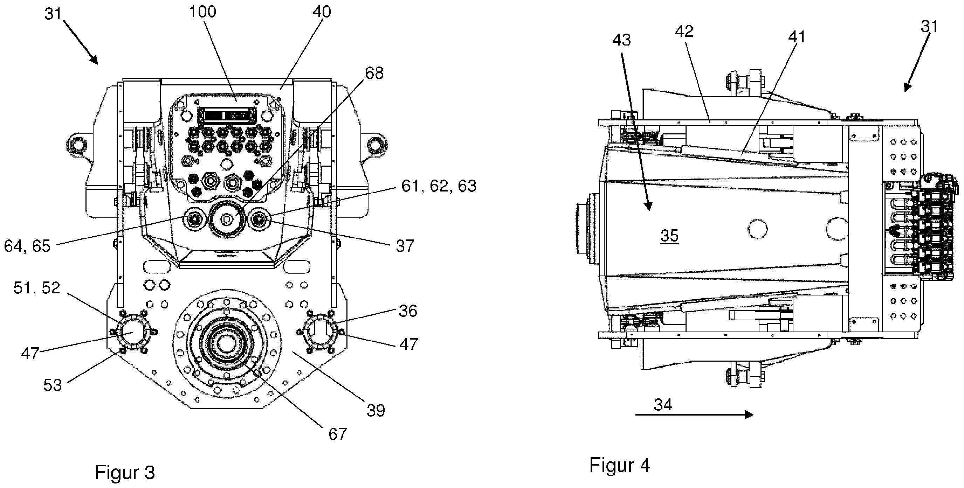

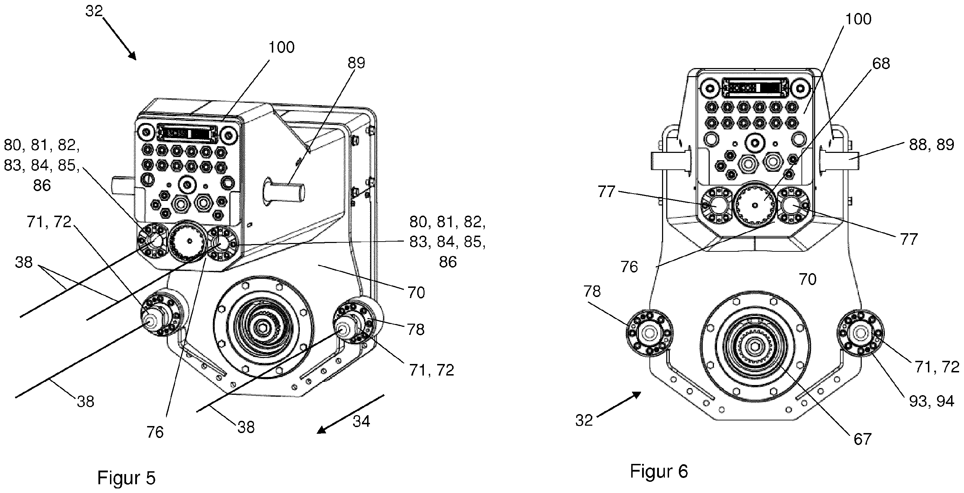

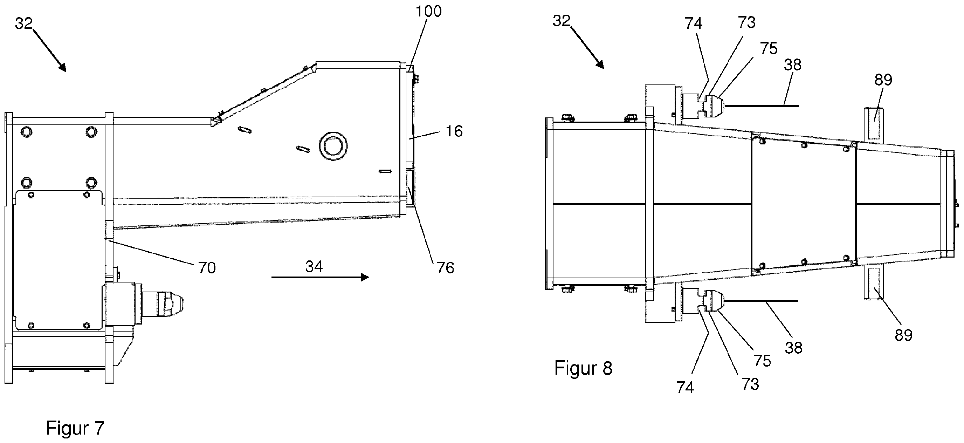

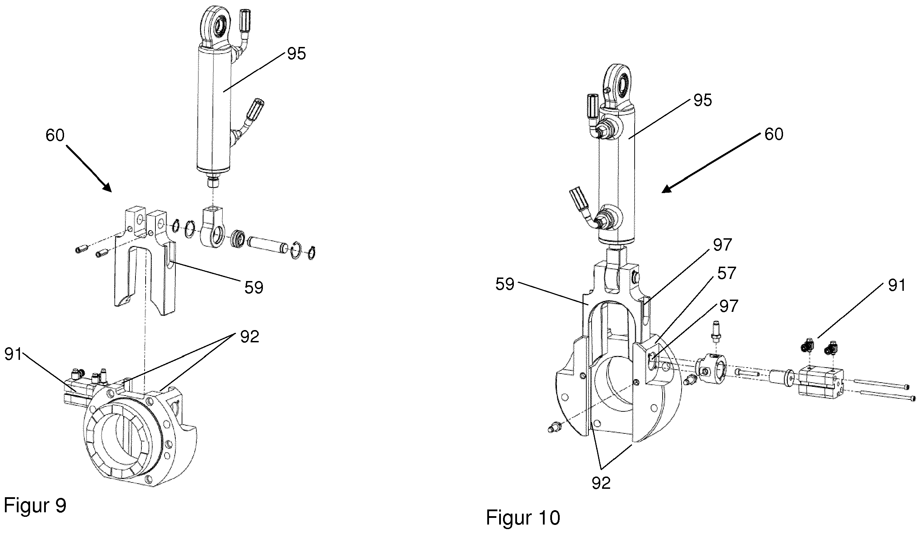

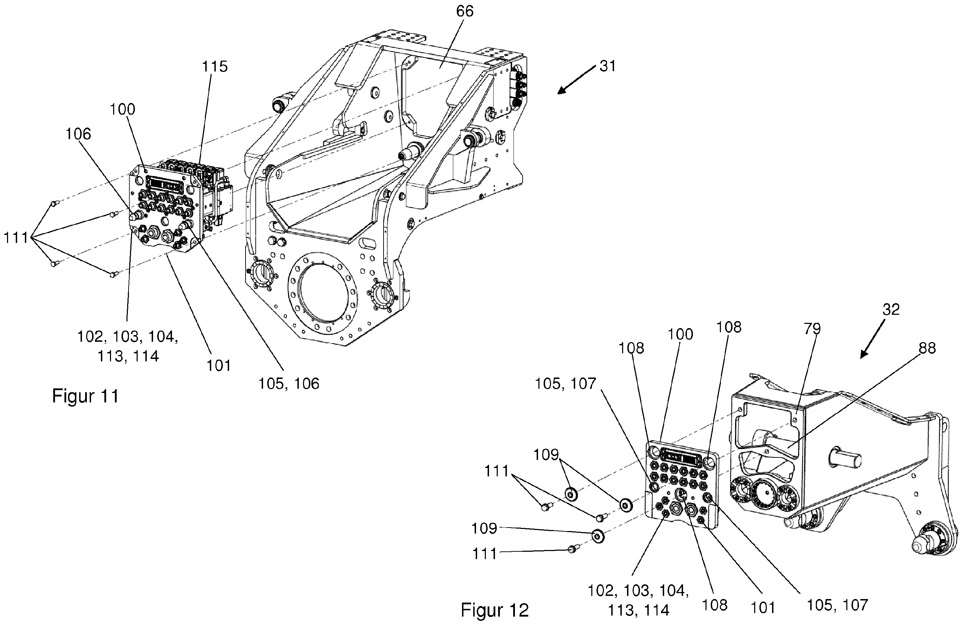

Im Folgenden wird ein Kopplungssystem beschrieben (Figuren 1 bis 12)

Im Folgenden wird eine Dockingaufnahme 31 einer Dockingvorrichtung 30 (Kopplungsvorrichtung) zum Aufnehmen eines Dockingeinschubes 32 (Kopplungseinrichtung) anhand eines Ausführungsbeispiels beispielhaft beschrieben.

Die Dockingaufnahme 31 umfasst eine in etwa U-förmige Vorzentriereinrichtung 33 mit einer sich in einer Einführrichtung 34 in etwa konisch verjüngenden Einführwanne 35 zum Vorzentrieren eines korrespondierend zur Dockingaufnahme ausgebildeten Dockingeinschubes 32.

Weiterhin sind zumindest eine erste und eine zweite Zentriereinrichtung 36, 37 an der Dockingaufnahme 31 vorgesehen, wobei die erste und die zweite Zentriereinrichtung 36, 37 jeweils zwei Kopplungselemente und/oder Gegenkopplungselemente zum Verbinden mit entsprechenden Kopplungselementen und/oder Gegenkopplungselementen eines Dockingeinschubes 32 umfassen.

Weiterhin sind die erste und die zweite Zentriereinrichtung 36, 37 zum Zentrieren des Dockingeinschubes 32 bezüglich der Dockingaufnahme 31 entlang von vier Zentrierachsen 38 entsprechend der vier Kopplungs- bzw. Gegenkopplungselemente in der Einführrichtung 34 ausgebildet. Zudem umfasst die Dockingaufnahme 31 eine Einzugseinrichtung mit zwei hydraulisch betätigbaren Fanghaken 44 zum Einziehen des Dockingeinschubes 32 in die Dockingaufnahme 31 in der Einführrichtung 34.

Die Dockingaufnahme 31 umfasst zwei sich in vertikaler Richtung erstreckende und in horizontaler Richtung versetzt zueinander angeordnete Dockingwandungen 39, 40.

Diese beiden Dockingwandungen 39, 40 sind über eine sich in etwa in horizontaler Richtung erstreckende Einführwanne 35 miteinander verbunden.

Dementsprechend sind eine erste Dockingwandung 39 in vertikaler Richtung im Bereich unterhalb der Einführwanne 35 und eine zweite Dockingwandung als Begrenzung der Einführwanne 35 in horizontaler Richtung oberhalb der Einführwanne 35 angeordnet.

Die Einführwanne übernimmt die Aufgabe der Vorzentrierung beim Einführen eines Dockingeinschubes in die Dockingaufnahme durch Aufnahme eines korrespondierend zur Einführwanne 35 ausgebildeten Körpers des Dockingeinschubes 32.

Zum Vorzentrieren des Dockingeinschubes 32 beim Einführen in die Dockingaufnahme 31 verjüngt sich die Geometrie der Einführwanne 35 in Einführrichtung 34, um eine Vorzentrierung des Dockingeinschubes zu ermöglichen.

An beiden Seiten der Einführwanne 35 sind in etwa quer zur Einführrichtung 34 sich in vertikaler Richtung erstreckende innere und äußere Seitenwandungen 41, 42 vorgesehen. Diese inneren und äußeren Seitenwandungen 41, 42 sind unter einem vorbestimmten Winkel in Einführrichtung 34 derart angeordnet, dass sich ein Aufnahmeraum 43, begrenzt durch die inneren Seitenwandungen 41 und die Einführwanne 35, in Einführrichtung verjüngt.

In den inneren Seitenwandungen 41 sind Fangzapfenführungen 45 ausgebildet, die zum Führen und Aufnehmen entsprechender, an einem Dockingeinschub 32 ausgebildeter Fangzapfen vorgesehen sind.

In den inneren und äußeren Seitenwandungen 41, 42 sind in entsprechenden Bohrungen Wellen angeordnet, auf denen die Fanghaken 44 drehbar gelagert sind.

Somit sind die Fanghaken in einem durch die inneren und äußeren Seitenwandungen begrenzten Fanghakenraum angeordnet. Die Fanghaken sind von entsprechenden Fanghakenzylindern 46 betätigbar.

Im Bereich der ersten Dockingwandung 39 sind buchsenförmige Zentrierzapfenaufnahmen 47 (Gegenkopplungselemente) vorgesehen, die die erste Zentriereinrichtung 36 der Dockingaufnahme 31 ausbilden.

In Einführrichtung 34 ist zunächst die erste Dockingwandung 39 vorgesehen, die zwei Bohrungen 48 zur Aufnahme der buchsenförmigen Zentrierzapfenaufnahmen 47 aufweist.

In den Bohrungen 48 sind die buchsenförmigen Zentrierzapfenaufnahmen 47 angeordnet.

Die buchsenförmigen Zentrierzapfenaufnahmen 47 sind somit in Einführrichtung 34 hinter der ersten Dockingwandung 39 angeordnet.

Die buchsenförmigen Zentrierzapfenaufnahmen 47 umfassen in Einführrichtung 34 einen rohrförmigen Einführ-/Zentrierabschnitt 49 und einen Sicherungsabschnitt 54.

Der rohrförmige Einführ-/Zentrierabschnitt 49 weist eine sich kegelförmig verjüngende Einführausnehmung 50 auf, wobei eine entgegen der Einführrichtung 34 angeordnete, vertikale Stirnfläche aus der ersten Dockingwandung 39 hervorsteht und eine erste axiale Anschlagfläche 51 einer ersten Anschlageinrichtung 52 ausbildet. In dieser kreisringförmigen ersten Anschlagfläche 51 sind radial umlaufend und gleich beabstandet voneinander Schmutzabführnuten 53 zum Aufnehmen und Abführen von Verunreinigungen ausgebildet.

Derartige Verschmutzungen würden die Position des Anschlages verändern. Dies ist dahingehend nachteilig, dass keine exakte Kopplung zwischen Dockingaufnahme und Dockingeinrichtung möglich ist.

Der rohrförmigen Einführ-/Zentrierabschnitt 49 weist eine sich in Einführrichtung 34 an die Einführausnehmung anschließende zylindrische Zentrierausnehmung 55 auf.

Der rohrförmige Sicherungsabschnitt 57 weist an einer entgegen der Einführrichtung 34 liegenden kreisringförmigen Stirnfläche Bohrungen 56 zum Verbinden mit der ersten Dockingwandung 39, bspw. mittels entsprechender Schraubenverbindungen, auf. Diese Stirnfläche weist einen größeren Durchmesser als der rohrförmige Einführ-/Zentrierabschnitt 49 auf und bildet auf diese Weise eine radial umlaufende Anschlagschulter aus, die ein Verschieben der buchsenförmigen Zentrieraufnahme entgegen der Einführrichtung 34 verhindert.

Diese Ausführung hat den Vorteil, dass die Längskräfte, die einerseits von Anbaugeräten eingeleitet werden und andererseits durch die Keilkräfte der Keilgabeln überlagert werden, nicht über einen Schraubverband in die Dockingaufnahme eingeleitet werden müssen.

Weiterhin sind im rohrförmigen Sicherungsabschnitt 57 sich in vertikaler Richtung erstreckende Nuten 58 zur Aufnahme von hydraulisch betätigbaren Keilgabeln 59 vorhanden.

Die Keilgabeln 59 sind zum Fixieren eines entsprechenden Zentrierzapfens eines Dockingeinschubes 32 vorgesehen und in vertikaler Richtung von einer Freigabestellung in eine Fixierstellung verschiebbar. Die Keilgabeln 59 bilden somit eine axiale Sicherungseinrichtung 60 aus.

In etwa mittig in der ersten Dockingwandung 39 ist im Bereich zwischen den beiden buchsenförmigen Zentrierzapfenaufnahmen 47 eine Antriebswellenverbindungseinrichtung vorgesehen. Eine Antriebswellenverbindungseinrichtung 67 ist ein Teil einer Antriebswellenverbindungsvorrichtung zum Verbinden eines fahrzeugseitigen Endes einer Antriebswelle mit einem anbaugeräteseitigen Ende einer Antriebswelle.

In der zweiten Dockingwandung 40 ist eine Ausnehmung 66 zur Aufnahme einer Kupplungsplatte zum Bereitstellen von elektrischen, elektronischen, hydraulischen und/oder pneumatischen Verbindungen zwischen einem Fahrzeug und einem Anbaugerät ausgebildet.

Die Kupplungsplatte mit angeflanschtem Ventilblock kann durch Lösen von nur vier Schrauben zu Reparaturzwecken sehr einfach und schnell entgegen der Einführrichtung 34 ausgebaut werden.

Weiterhin sind im Bereich der zweiten Dockingwandung 40 zwei sich entgegen der Einführrichtung 34 erstreckende Zentrierzapfen 61 (Kopplungselemente) vorgesehen, die die zweite Zentriereinrichtung 37 der Dockingaufnahme 31 ausbilden.

Die Zentrierzapfen 61 weisen in Einführrichtung 34 einen kegelförmigen Einführabschnitt 62 und einen sich daran anschließenden zylindrischen Zentrierabschnitt 63 auf.

Eine in Einführrichtung 34 vorne liegende sich an den Zentrierabschnitt 63 anschließende kreisringförmige vertikale Stirnfläche bildet eine zweite Anschlagfläche 64 einer zweiten Anschlageinrichtung 65 aus.

Die Kopplungselemente und/oder die Gegenkopplungselemente der ersten und der zweiten Zentriereinrichtung bilden somit zumindest zwei axiale Anschlageinrichtungen aus, die eine Relativbewegung zwischen Dockingaufnahme und Dockingeinschub in Einführrichtung begrenzen.

Die Anschläge sind vorzugsweise an den ersten und/oder zweiten Zentrierzapfen und/oder an den ersten und/oder zweiten Zentrierausnehmungen sich in einer Ebene senkrecht zur Einführrichtung erstreckenden kreisringförmigen Anschlagflächen ausgebildet.

In etwa mittig in der zweiten Dockingwandung 40 ist im Bereich zwischen den beiden Zentrierzapfen 66 eine Zapfwellenverbindungseinrichtung 68 vorgesehen. Eine Zapfwellenverbindungseinrichtung 68 ist ein Teil einer Zapfwellenverbindungsvorrichtung zum Verbinden eines fahrzeugseitigen Endes einer Zapfwelle mit einem anbaugeräteseitigen Ende einer Zapfwelle.

Die Dockingaufnahme wird über eine große (Durchmesser ca. 258 mm), mechanisch bearbeitete Bohrung in der ersten Platte auf einem Zentrieransatz an einem Zentralrohrflansch eines Achsmittelstücks positioniert. Diese Präzision ermöglicht, dass für die Verbindung des Zapfwellenabtriebs des Getriebes und der Zapfwellenverbindungseinrichtung eine Verbindungswelle mit verzahnten Muffen verwendet werden kann. Eine teure und vor allem nicht wartungsfreie Verbindung mittels einer Kardanwelle ist dadurch nicht notwendig.

Im Folgenden wird der erfindungsgemäße Dockingeinschub 32 beispielhaft beschrieben. Der Dockingeinschub 32 ist korrespondierend zur Dockingaufnahme 31 ausgebildet.

Der Dockingeinschub 32 weist in Einführrichtung 34 zunächst eine erste Dockingwandung 70 auf. Die erste Dockingwandung 70 erstreckt sich im Wesentlichen in vertikaler Richtung und weist unterseitig eine zur Einführwanne 35 der Dockingaufnahme 31 korrespondierend ausgebildete Unterwandung 89 auf.

Weiterhin ist an der ersten Dockingwandung 70 in etwa mittig eine Antriebswellenverbindungseinrichtung vorgesehen.

Korrespondierend zu den Zentrierzapfenaufnahmen 47 der ersten Zentriereinrichtung 36 der Dockingaufnahme 31 sind an der ersten Dockingwandung 70 des Dockingeinschubs 31 sich in Einführrichtung 34 erstreckende erste Zentrierzapfen 71 einer ersten Zentriereinrichtung 72 des Dockingeinschubes 32 ausgebildet.

Die ersten Zentrierzapfen 71 weisen in Einführrichtung 34 einen zylindrischen Zentrierabschnitt 73 und einen sich daran anschließenden kegelförmigen Einführabschnitt 74 auf.

Weiterhin weisen die ersten Zentrierzapfen 71 entgegen der Einführrichtung kreisringförmige erste Anschlagflächen 93 auf, die eine erste Anschlageinrichtung 94 der ersten Zentriereinrichtung 72 ausbilden.

Im zylindrischen Zentrierabschnitt 73 sind sich in vertikaler Richtung erstreckende und konvex und korrespondierend zu den Keilgabeln 59 ausgebildete Keilgabelaufnahmenuten 74 vorgesehen.

An der ersten Dockingwandung ist ein sich in Einführrichtung erstreckender Einführkörper 75 zum Anordnen im Aufnahmeraum 43 der Dockingaufnahme 31 vorgesehen.

In Einführrichtung vorne weist der Einführkörper 75 eine sich in etwa in vertikaler Richtung erstreckende zweite Dockingwandung 76 auf.

In der zweiten Dockingwandung sind korrespondierend zu den zweiten Zentrierzapfen 61 der zweiten Zentriereinrichtung 37 der Dockingaufnahme 31 entsprechende Zentrierzapfenaufnahmen 77 einer zweiten Zentriereinrichtung 78 des Dockingeinschubes 32 ausgebildet.

Die zweite Dockingwandung 76 weist zwei Bohrungen 80 zur Aufnahme der buchsenförmigen Zentrierzapfenaufnahmen 77 auf.

In den Bohrungen 80 sind die buchsenförmigen Zentrierzapfenaufnahmen 77 angeordnet.

Die buchsenförmigen Zentrierzapfenaufnahmen 77 umfassen in Einführrichtung 34 einen Zentrierabschnitt 82 und einen Einführabschnitt 81.

Der rohrförmige Einführabschnitt 81 weist eine sich kegelförmig verjüngende Einführausnehmung 83 auf, wobei eine entgegen der Einführrichtung 34 angeordnete Stirnfläche aus der zweiten Dockingwandung 76 hervorsteht und eine zweite axiale Anschlagfläche 84 einer zweiten Anschlageinrichtung 85 ausbildet. In dieser kreisringförmigen zweiten Anschlagfläche 85 sind radial umlaufend und gleich beabstandet voneinander Schmutzabführnuten 86 zum Aufnehmen und Abführen von Verunreinigungen ausgebildet.

Der rohrförmige Zentrierabschnitt 82 weist eine sich entgegen der Einführrichtung 34 an die Einführausnehmung 83 anschließende zylindrische Zentrierausnehmung 87 auf.

Im Bereich zwischen diesen Zentrierzapfenausnehmungen 77 ist eine Zapfwellenverbindungseinrichtung angeordnet.

Im Bereich in vertikaler Richtung oberhalb der zweiten Zentriereinrichtung 78 ist eine Kupplungsplattenaufnahme ausgebildet.

Weiterhin ist am Einführkörper 75 eine sich quer zur Einführrichtung 34 erstreckende Fangzapfenwelle 88 angeordnet. Die Enden der Welle bilden Fangzapfen 89 aus. Diese Fangzapfen 89 werden beim Einführen des Dockingeinschubes 32 in die Dockingaufnahme 31 von den Fanghaken 44 der Dockingaufnahme 31 erfasst und anschließend wird mittels der hydraulisch betätigbaren Fanghaken 44 der Dockingeinschub 32 in die Dockingaufnahme 32 gezogen, wobei eine Unterwandung 90 des Einführkörpers 75 des Dockingeinschubes 32 entsprechend in der Einführwanne 35 der Dockingaufnahme 31 gleitet.

Neben einer axialen Verriegelung als Sicherungseinrichtung 60 weisen die hydraulischen Keilgabeln noch eine sich quer zur Einführrichtung erstreckende zweite Verriegelungseinrichtung auf. Die zweite Verriegelungseinrichtung umfasst einen pneumatisch betätigbaren Sicherungskörper, der die Keilgabeln in den Zentrierzapfenbuchsen fixiert.

Diese zweite Verriegelung kann nur erfolgen, wenn die hydraulische Keilgabel korrekt positioniert ist. Dementsprechend ist ein Sensor vorgesehen, um die Stellung der hydraulischen Keilgabel zu überprüfen.

Keilgabeln haben den Vorteil, dass sie gut automatisierbar sind. Die Keilgabeln sind zu jedem Zeitpunkt in den Keilgabelnuten geführt.

Gemäß einer alternativen Ausführungsform kann auch vorgesehen sein, dass die Zentriereinrichtungen bzw. deren Zentrierelemente (Zapfen, Buchsen) vertauscht sind.

Hierbei ist lediglich von entscheidender Bedeutung, dass sowohl die beiden Zentrierzapfen bzw. Zentrierausnehmungen der ersten und der zweiten Zentriereinrichtung derart ausgebildet sind, dass alle vier Komponenten ein gleichzeitiges Zentrieren ermöglichen, da ein am Dockingeinschub angeordnetes Anbaugerät häufig ein sehr hohes Gewicht aufweist und dementsprechend eine genaue Zentrierung in axialer Einführrichtung notwendig ist.

Im Folgenden wird eine Kupplungsplatte 100 beschrieben.

Eine Kupplungsplatte 100 ist zum Ausbilden von elektrischen, elektronischen, hydraulischen und/oder pneumatischen Verbindungen vorgesehen.

Diese Kupplungsplatte 100 umfasst eine in etwa ebenflächige Basisplatte 101. Diese Basisplatte 101 kann mit einer Vielzahl von elektrischen, elektronischen, hydraulischen und/oder pneumatischen sowie mechanischen Verbindungselementen versehen sein.

An der Basisplatte 101 sind zumindest zwei hydraulische Anschlusseinrichtungen 113 ausgebildet.

Diese beiden hydraulischen Anschlusseinrichtungen 113 sind zum Betätigen von nahezu an allen verbindbaren Modulen vorhandenen Stützfußzylindern vorgesehen.

Zudem ist an der Basisplatte 101 zumindest eine elektronische Verbindungseinrichtung 102 zum Bereitstellen einer elektronischen Verbindung zwischen einer Steuereinrichtung eines Fahrzeuges und einer Steuereinrichtung eines Fahrzeuges vorgesehen. Diese elektronische Verbindung dient zum Identifizieren der Art des Modules bzw. des Anhängers bzw. des Anbaugerätes.

Weiterhin ist an der Basisplatte 101 zumindest eine elektrische Verbindungseinrichtung 103 angeordnet.

Diese elektrische Verbindungseinrichtung ist zum Betätigen eines Lichtes (z.B. Brems-, Vorder-, Rück-, Positions- oder Warnlicht) am Anbaumodul vorgesehen.

Weiterhin sind zwei elektrische Kontrollkontakte 104 die durch Koppeln des Dockingeischubes 32 mit der Dockingaufnahme 31 miteinander elektrisch verbunden werden, um zu detektieren, ob der Dockingeinschub 32 vollständig in die Dockingaufnahme 31 eingezogen ist und eine Sicherungs- und/oder Verriegelungseinrichtung aktiviert werden kann.

Neben den vorstehend genannten Mindestverbindungseinrichtungen weist die Kupplungsplatte eine Zentriereinrichtung 105 auf. Diese Zentriereinrichtung 105 umfasst, wenn die Kupplungsplatte 100 für die Dockingaufnahme 31 vorgesehen ist, zumindest zwei Zentrierzapfen 106, wobei entsprechend an einer Kupplungsplatte des Dockingeinschubes 32 die korrespondierenden Zentrierausnehmungen 107 ausgebildet sind.

Die Zentriereinrichtung umfasst zumindest zwei Kopplungs- (Zentrierzapfen 106) und/oder Gegenkopplungselemente (Zentrierausnehmung 107).

Weiterhin sind in einer Kupplungsplatte 100 drei Verbindungsbohrungen 108 zum Verbinden der Kupplungsplatte 100 mit einem Dockingeinschub 32 oder einer Dockingaufnahme 31 vorgesehen.

In diesen Verbindungsbohrungen 108, vorzugsweise des Dockingeinschubes 32, sind rohrförmige Kunststoffbuchsen 109 bzw. Gummilager vorgesehen, aus einem elastischen Material anordbar, um ein geringes Spiel zu ermöglichen und so beim Verbinden zweier Kupplungsplatten die Präzision zu erhöhen.

In entsprechenden Ausnehmungen 110 der Kunststoffbuchsen 109 sind Verbindungsmittel 111, wie z.B. Schrauben, anordbar, um die Kupplungsplatte 100 mit einer Kopplungseinrichtung, wie z.B. einem Dockingeinschub 32 oder einer Dockingaufnahme zu verbinden.

Die Kunststoffbuchsen 109 bilden in Verbindung mit den Verbindungsmitteln 111 eine Lagerungseinrichtung 112 aus.

In der Basisplatte 101 sind auch pneumatische Verbindungseinrichtungen 114 vorgesehen.

Im Folgenden werden Merkmale der Kupplungsplatte näher beschrieben.

Eine fahrzeugseitig ausgebildete Kupplungsplatte 100 umfasst die in etwa ebenflächige Basisplatte 101, bei der anbaugeräteseitig eine elektrische Verbindungseinrichtung 103 und/oder elektronische Verbindungseinrichtung 102, wie z.B. Elektrostecker 102, hydraulische Anschlusseinrichtungen 113, wie z.B. Hydraulikkupplungen 113, und pneumatische Verbindungseinrichtungen 114, wie z.B. Druckluftkupplungen sowie Zentrierzapfen 106 zur Feinzentrierung der anbaugeräteseitigen Kupplungsplatte integriert sind.

Fahrzeugseitig ist ein Ventilblock 115 mit bis zu sechs doppeltwirkenden hydraulischen Steuergeräten (nicht dargestellt) angeflanscht.

Die Kupplungsplatte 100 ist hydraulisch derart ausgeführt, dass für eine Arbeitshydraulik nur die Druck-, Tank- und Lastmeldeleitungen angeschlossen sind. Die Leitung zwischen diesen Hauptanschlüssen und den Kupplungen eines Power-Beyond-Systems sowie der Versorgung des Ventilblocks 115 ist in die Basisplatte 101 integriert.

Die Basisplatte 101 ist über Verbindungsmittel 111 fest mit einer fahrzeugseitigen Dockingaufnahme 31 verschraubt.

Die geräteseitige Kupplungsplatte 100 am Dockingeinschub umfasst die entsprechenden Gegenstecker und Kupplungen und ist über die Lagerungseinrichtung 112 bzw. die Kunststoffbuchsen 109 und die Verbindungsmittel 111 fest mit einem Dockingeinschub 32 verbunden.

Die Lagerungseinrichtung 112 ist somit zum Bereitstellen eines geringfügigen Spiels der Kupplungsplatte in einer vertikalen und einer horizontalen Ebene bezüglich einer Kopplungseinrichtung ausgebildet. Das ermöglicht der Kupplungsplatte 100, sich über die Kunststoffbuchsen 109 bzw. Gummibuchsen und die darin vorgesehenen Bohrungen sich gegenüber den fahrzeugseitigen Zentrierzapfen 106 fein zu zentrieren, um eine für die Hydraulikkupplung erforderliche präzise Ausrichtung im Bereich von 0,05 mm zu erreichen.

Das Verbinden zweier Kupplungsplatten 100 erfolgt indem ein Dockingeinschub 32 mit einer Dockingaufnahme 31 verbunden wird.

Beim Verbinden zweier erfindungsgemäßer Kupplungsplatten 100 ist demgemäß vorgesehen, dass die Zentrierzapfen 106 einer mit einer Dockingaufnahme 31 verbundenen Kupplungsplatte 100 in die entsprechenden Zentrierausnehmungen 105 einer mit einem Dockingeinschub 32 verbundenen erfindungsgemäßen Kupplungsplatte eindringen und auf diese Weise die beiden Kupplungsplatten 100 insbesondere in einer vertikalen Verbindungsebene präzise zueinander ausrichten.

Auf diese Weise werden sämtliche an Dockingeinschub 32 und Dockingaufnahme 31 vorgesehenen elektrischen, elektronischen, hydraulischen und/oder pneumatischen Verbindungen miteinander verbunden.

Im Folgenden wird ein Verfahren zum Docking bzw. ein Einführen des Dockingeinschubes in die Dockingaufnahme bzw. ein erfindungsgemäßes Verfahren zum Verbinden eines Dockingeinschubes mit einer Dockingaufnahme beschrieben.

Zunächst wird der Einführkörper 75 des Dockingeinschubes im Bereich des Aufnahmeraums 43 der Dockingaufnahme 31, vorzugsweise durch Verfahren des Fahrzeuges und somit der daran angeordneten Dockingaufnahme 31, angeordnet.

Dabei erfolgt eine Vorzentrierung des Dockingeinschubes in der Dockingaufnahme anhand des Gleitens der Unter- bzw. Einführwandung 90 des Dockingeinschubes 32 in der Einführwanne 35 der Dockingaufnahme 31.

Nachdem eine Relativbewegung in Einführrichtung über eine vorbestimmte Länge erfolgt ist, werden die Fanghaken 44 der Dockingaufnahme mittels der Fanghakenzylinder 46 betätigt und zunächst in vertikaler Richtung nach unten abgesenkt, so dass Fangausnehmungen 69 der Fanghaken 44 die Fangzapfen 89 des Dockingeinschubes hintergreifen.

Das Bewegen des Dockingeinschubes in die Dockingaufnahme erfolgt somit zunächst durch Bewegen des Fahrzeuges. Dabei erfolgt eine Vorzentrierung. Anschließend rasten die Fanghaken ein und ziehen den Dockingeinschub in Einführrichtung in die Dockingaufnahme.

Zwei Rollen, die in der Dockingaufnahme drehbar gelagert sind, bilden mit einem Schlitz im Fanghaken und einer Bahn auf der Oberseite des Fanghakens eine Kulissenführung. Diese Kulissenführung bewirkt, dass sich die Fanghaken beim Ausfahren zuerst in Fahrzeuglängsrichtung und anschließend nach oben bewegen. Dadurch ergibt sich eine Öffnung in die beim Einfahren in den Dockingeinschub die Fangzapfen eingeführt werden. Beim Einziehen der Fanghaken bewegen sich die Haken zuerst nach unten und verhaken sich mit den Fangzapfen. Anschließend wird der Dockingeinschub eingezogen.

Anschließend gleiten die Fangzapfen entlang einer Fangzapfenführung 45 in den inneren Seitenwandungen 41 der Dockingaufnahme 31, wobei die Fangzapfen 89 in der Fangzapfenführung 45 lediglich mit geringem Spiel angeordnet sind.

Durch eine weitere Bewegung des Dockingeinschubes 31 in Einführrichtung 34 erfolgt anschließend eine weitere Zentrierung des Dockingeinschubes 32 in der Dockingaufnahme 31 über die ersten und zweiten Zentriereinrichtungen 36, 37, 72, 78 der Dockingaufnahme 31 und des Dockingeinschubes 32 entlang der vier Zentrierachsen 38.

Dabei gleiten die zwei Zentrierzapfen 71 der ersten Zentriereinrichtung 72 des Dockingeinschubes 32 mit ihren kegelförmigen Einführabschnitten 74 in die kegelförmigen Einführöffnungen 50 der zwei Zentrierzapfenaufnahmen 47 der ersten Zentriereinrichtung 36 der Dockingaufnahme 31.

Gleichzeitig gleiten die kegelförmigen Flächen der Einführabschnitte 62 der Zentrierzapfen 61 der zweiten Zentriereinrichtung 37 der Dockingaufnahme 31 in die Einführausnehmungen 83 der Zentrierzapfenaufnahmen 77 der zweiten Zentriereinrichtung 78 des Dockingeinschubes.

Durch eine weitere Bewegung des Dockingeinschubes 31 in Einführrichtung 34 erfolgt anschließend eine weitere Feinzentrierung des Dockingeinschubes 32 in der Dockingaufnahme 31.

Dabei gleiten die zwei Zentrierzapfen 71 der ersten Zentriereinrichtung 72 des Dockingeinschubes 32 mit ihren zylindrischen Zentrierabschnitten 73 in die zylindrischen Zentrierausnehmungen 55 der zwei Zentrierzapfenaufnahmen 47 der ersten Zentriereinrichtung 36 der Dockingaufnahme 31.

Gleichzeitig gleiten die zylindrischen Zentrierabschnitte 63 der Zentrierzapfen 61 der zweiten Zentriereinrichtung 37 der Dockingaufnahme 31 in die Zentrierausnehmungen 87 der Zentrierzapfenaufnahmen 77 der zweiten Zentriereinrichtung 78 des Dockingeinschubes.

Die Bewegung des Dockingeinschubes 32 in Einführrichtung 34 hin zur Dockingaufnahme 31 wird durch die ersten Anschlagflächen 51, 93 der ersten Anschlageinrichtungen 52, 94 der ersten Zentriereinrichtung 36, 72 begrenzt.

Weiterhin wird die Bewegung des Dockingeinschubes 32 in Einführrichtung 34 hin zur Dockingaufnahme 31 durch die zweiten Anschlagflächen 64, 84 der zweiten Anschlageinrichtungen 65, 85 der ersten Zentriereinrichtung 36, 72 begrenzt.

Sobald die Anschlagflächen 51, 93 der ersten Anschlageinrichtungen 52, 94 und die Anschlagflächen 64, 84 der zweiten Anschlageinrichtung 65, 85 aneinander anstehen, ist das Einführen des Dockingeinschubes 32 in die Dockingaufnahme 31 in axialer Richtung begrenzt.

Der Dockingeinschub 32 ist nun vollständig in die Dockingaufnahme 31 eingeführt.

Vorzugsweise sind sowohl am Dockingeinschub 32 als auch an der Dockingaufnahme 31 elektrische Kontakte (nicht dargestellt) vorgesehen, die einander kontaktieren, sobald der Dockingvorgang beendet ist. Ein auf diese Weise generiertes Signal wird verwendet, um die Betätigungszylinder 95 der hydraulisch betätigbaren Keilgabeln 59 in vertikaler Richtung nach unten derart zu verschieben, dass Gabeln der Keilgabeln 59 in die Nuten 58 des Sicherungsabschnittes 57 der ersten Zentrierzapfen 71 der ersten Zentriereinrichtung 72 des Dockingeinschubes eingreifen und zusätzlich zu den Fanghaken 44 ein Auskoppeln des Dockingeinschubes 32 aus der Dockingaufnahme 31 verhindern.

Zur Sicherung der Keilgabeln ist eine pneumatisch betätigbare Verriegelungseinrichtung 91 vorgesehen, die entsprechende Verriegelungszapfen 96 durch im Sicherungsabschnitt 57 und in den Gabeln der Keilgabel 59 ausgebildete Verriegelungsbohrungen 97 anbringen und auf diese Weise die Position der Keilgabeln 59 fixieren und sichern.

Gleichzeitig sind in dieser Endstellung ggf. Zapfwellenverbindungseinrichtungen und/oder Antriebswellenverbindungeinrichtungen der Dockingaufnahme 31 und des Dockingeinschubes 32 miteinander verbunden.

### Bezugszeichenliste

- 30: Dockingvorrichtung
- 31: Dockingaufnahme
- 32: Dockingeinschub
- 33: Vorzentriereinrichtung
- 34: Einführrichtung
- 35: Einführwanne
- 36: erste Zentriereinrichtung
- 37: zweite Zentriereinrichtung
- 38: Zentrierachsen
- 39: erste Dockingwandung
- 40: zweite Dockingwandung
- 41: innere Seitenwandung
- 42: äußere Seitenwandung
- 43: Aufnahmeraum
- 44: Fanghaken
- 45: Fangzapfenführung
- 46: Fanghakenzylinder
- 47: Zentrierzapfenaufnahme
- 48: Bohrung
- 49: Einführ-/Zentrierabschnitt
- 50: kegelförmige Einführöffnung
- 51: erste axiale Anschlagfläche
- 52: erste Anschlageinrichtung
- 53: Schmutzabführnuten
- 54: rohrförmiger Zentrierabschnitt
- 55: zylindrische Zentrierausnehmung
- 56: Bohrung
- 57: Sicherungsabschnitt
- 58: Nuten
- 59: Keilgabel
- 60: axiale Sicherungseinrichtung
- 61: Zentrierzapfen
- 62: Einführabschnitt
- 63: Zentrierabschnitt
- 64: zweite Anschlagfläche
- 65: zweite Anschlageinrichtung
- 66: Ausnehmung
- 67: Antriebswellenverbindungseinrichtung
- 68: Zapfwellenverbindungseinrichtung
- 69: Fangausnehmungen
- 70: erste Dockingwandung
- 71: erster Zentrierzapfen
- 72: erste Zentriereinrichtung
- 73: zylindrischer Zentrierabschnitt
- 74: Keilgabelaufnahmenut
- 75: Einführkörper
- 76: zweite Dockingwandung
- 77: Zentrierzapfenaufnahme
- 78: zweite Zentriereinrichtung
- 79: Kupplungsplattenaufnahme
- 80: Bohrung
- 81: Sicherungsabschnitt
- 82: Zentrierabschnitt
- 83: Einführausnehmung
- 84: zweite Anschlagfläche
- 85: zweite Anschlageinrichtung
- 86: Schmutzabführnut
- 87: Zentrierausnehmung
- 88: Fangzapfenwelle
- 89: Fangzapfen
- 90: Unterwandung
- 91: Verriegelungseinrichtung
- 92: Keilgabelaufnahmenut
- 93: erste Anschlagfläche
- 94: erste Anschlageinrichtung
- 95: Betätigungszylinder Keilgabel
- 96: Verriegelungszapfen
- 97: Verriegelungsbohrung
- 100: Kupplungsplatte
- 101: Basisplatte
- 102: elektronische Verbindungseinrichtung
- 103: elektrische Verbindungseinrichtung
- 104: elektrischer Kontrollkontakt
- 105: Zentriereinrichtung
- 106: Zentrierzapfen
- 107: Zentrierausnehmung
- 108: Verbindungsbohrung
- 109: Kunststoffbuchse
- 110: Ausnehmung
- 111: Verbindungsmittel
- 112: Lagerungseinrichtung
- 113: hydraulische Anschlusseinrichtung
- 114: pneumatische Verbindungseinrichtung
- 115: Ventilblock

- 200: Antriebswellenverbindungsvorrichtung
- 201: fahrzeugseitige Antriebswellenverbindungseinrichtung
- 202: anbaugeräteseitige Antriebswellenverbindungseinrichtung
- 203: Lagersitz
- 204: Kupplungsnabe
- 205: Verbindungsflansch
- 206: Abschlussdeckel
- 207: Befestigungsabschnitt
- 208: Lagerungsabschnitt
- 209: Mantelwandung
- 210: Zentrierschulter
- 211: Durchgangsöffnung
- 212: Lageraufnahmesitz
- 213: Schulter
- 214: Schraubverbindung
- 215: Schulter
- 216: Durchgangsöffnung
- 217: Lagerungseinrichtung
- 218: Mantelwandung
- 219: Antriebswellenaufnahmeabschnitt
- 220: Innenverzahnung
- 221: Dichtscheibe
- 222: Kopplungsabschnitt
- 223: Innenverzahnung
- 224: Lagersitz
- 225: Kuppelstück/Kupplungswelle
- 226: Lagerungswelle
- 227: Verbindungsmittelabschnitt
- 228: Durchgangsöffnung
- 229: Lageraufnahmeabschnitt
- 230: Schulter
- 231: Lagerungseinrichtung
- 232: Lagerabschnitt
- 233: Wellenstumpf
- 234: Außenverzahnung
- 235:
- 236: Kuppelstückaufnahme
- 237: Mantelwandung
- 238: Schulter
- 239: Schraubverbindung
- 240: Außenverzahnungen
- 241: Wellendichtring
- 242: umlaufende Radialnut

## Patentansprüche

1. Antriebswellenverbindungsvorrichtung mit einer fahrzeugseitigen und einer anbaugeräteseitigen Antriebswellenverbindungseinrichtung, wobei die Antriebswellenverbindungseinrichtungen der Antriebswellenverbindungsvorrichtung jeweils an einer Einrichtung zum Koppeln eines Fahrzeuges und einer Anbaueinrichtung, wie einem Anhänger, einer Zusatzachse oder einem Anbaugerät vorgesehen sind und wobei die Antriebswellenverbindungseinrichtungenmit den Einrichtungen zum Koppeln axial so festgelegt verbunden sind, dass bei einer mechanischen Kopplung des Fahrzeuges mit einer Zusatzachse oder einem Anhänger oder einem Anbaugerät die Antriebswellenverbindungseinrichtung miteinander zwangsgekoppelt werden, **dadurch gekennzeichnet, dass**
eine fahrzeugseitige Antriebswellenverbindungseinrichtung (201) einen Lagersitz (203) und eine darin drehbar gelagerte Kupplungsnabe (204) besitzt, wobei die Kupplungsnabe (204) einen napfförmigen, hohlzylindrischen Kopplungsabschnitt (222) mit einer Innenverzahnung (223) zum Verbinden mit einem Kuppelstück (225) einer Antriebswellenverbindungseinrichtung (202) aufweist und
die anbaugeräteseitige Antriebswellenverbindung (202) einen napfförmigen Lagersitz (224), ein Kuppelstück (225) und eine Lagerungswelle (226) besitzt, wobei das zylindrische Kuppelstück (225) kopplungsseitig eine Außenverzahnung (240) zum Koppeln mit der korrespondierend ausgebildeten Innenverzahnung (223) der Kupplungsnabe (204) besitzt und
die Lagerungswelle (226) kopplungsseitig eine napfförmige, hohlzylindrische Kuppelstückaufnahme (236) aufweist, wobei das Kuppelstück (225) in einer napfförmigen Kuppelstückaufnahme (236) der Lagerungswelle (226) angeordnet und mittels einer Schraubverbindung 239 fixiert ist.

2. Antriebswellenverbindungsvorrichtung nach Anspruch 1, **dadurch gekennzeichnet, dass** in etwa axial mittig des Kuppelstücks (225) eine umlaufende radiale Nut (242) eingebracht ist, welche die Außenverzahnung (240) in eine kuppelseitige Außenverzahnung (240) und eine Außenverzahnung (242) geteilt ist, welche in der hohlzylindrischen Kuppelstückaufnahme (236) und dort in einer entsprechenden Innenverzahnung (243) ruht.

3. Antriebswellenverbindungsvorrichtung nach Anspruch 1, **dadurch gekennzeichnet, dass** die axiale Nut (242) in montiertem Zustand des Kuppelstücks (225) in der Kuppelstückaufnahme (236) mit einer axialen Stirnwandung der Kuppelstückaufnahme (236) abschließt.

4. Antriebswellenverbindungsvorrichtung nach Anspruch 1,
**dadurch gekennzeichnet,**
**dass** die Verbindungseinrichtungen so an dem jeweiligen Kopplungselement festgelegt sind, dass beim Ineinanderschieben der Kopplungselemente die Teile zwangsverbunden werden, wobei eine Innenverzahnung einer Verbindungseinrichtung in die Außenverzahnung einer anderen Verbindungseinrichtung koaxial eingreift, so dass durch das axiale Ineinanderschieben die kraftschlüssige Kopplung erfolgt.

5. Antriebswellenverbindungsvorrichtung nach einem der vorhergehenden Ansprüche,
**dadurch gekennzeichnet,**
**dass** die axiale Festlegung der Antriebswellenverbindungseinrichtungen durch die mechanische Verbindung der Kopplungselemente erfolgt.

6. Antriebswellenverbindungsvorrichtung nach einem der vorhergehenden Ansprüche,
**dadurch gekennzeichnet,**
**dass** die Lagersitze (203, 224) Bestandteil der jeweiligen Antriebswellenverbindungseinrichtung sind und mittels einer Schraubverbindung oder einer Schweißverbindung oder einer anderen festlegenden Verbindung mit je einer Dockingaufnahme (31, 32) eines Fahrzeuges oder eines Anbaugeräts verbunden sind.

7. Antriebswellenverbindungsvorrichtung nach einem der vorhergehenden Ansprüche,
**dadurch gekennzeichnet,**
**dass** eine Außenverzahnung (240) des Kuppelstücks (225) einerseits und die hiermit korrespondierende Innenverzahnung (223) des hohlzylindrischen Kopplungsabschnitts (222) der Kupplungsnabe (204) andererseits derart ausgebildet sind, dass die Verzahnungen bzw. die Zähne zu den kopplungsseitigen Stirnflächen hin axial angefast sind oder mit stark angeschrägten konvergierenden Flanken ausgebildet sind, so dass die Zähne jeweils Findungstrichter für die korrespondierende Verzahnung bilden, so dass eine Innenverzahnung bzw. die Außenverzahnung an den schrägen Flanken oder Fasen beim Koppeln so entlang gleiten kann, dass sich die Verzahnungen ineinander drehen und ineinander gleiten können.

8. Fahrzeugseitige Antriebswellenverbindungseinrichtung einer Antriebswellenverbindungsvorrichtung nach einem der vorhergehenden Ansprüche,
**dadurch gekennzeichnet,**
**dass** sie einen Lagersitz und eine darin drehbar gelagerte Kupplungsnabe umfasst, wobei der Lagersitz zweigeteilt ausgebildet ist und einen fahrzeugseitigen Verbindungsflansch und einen kopplungsseitigen Abschlussdeckel aufweist, und wobei der rohrförmige Verbindungsflansch einen Befestigungsabschnitt und einen Lagerungsabschnitt aufweist und der Befestigungsabschnitt fahrzeugseitig an einer äußeren Mantelwandung radial umlaufend eine Zentrierschulter zum Zentrieren der fahrzeugseitigen Antriebswellenverbindungseinrichtung bzgl. einer Kopplungseinrichtung oder eines Fahrzeuges und einen in etwa kreisringförmigen Verbindungsmittelabschnitt zum Verbinden der fahrzeugseitigen Antriebswellenverbindungseinrichtung mit einer Kopplungseinrichtung oder mit einem Fahrzeug aufweist und wobei der Befestigungsabschnitt kopplungsseitig einen Teil eines Lageraufnahmesitzes ausbildet, der eine radial umlaufende Schulter aufweist, und wobei der Abschlussdeckel mit dem Verbindungsflansch mittels entsprechender Verbindungsmittel verbunden ist, und wobei der Abschlussdeckel einen fahrzeugseitigen Teil eines Lageraufnahmesitzes ausbildet, der eine radial umlaufende Schulter und kopplungsseitig eine Durchgangsöffnung für die Kupplungsnabe aufweist und wobei im Lageraufnahmesitz eine Lagerungseinrichtung angeordnet ist über die die Kupplungsnabe im Lagersitz drehbar gelagert ist und die Lagerungseinrichtung mit einer Mantelwandung eines rohrförmigen fahrzeugseitigen Antriebswellenaufnahmeabschnitts der Kupplungsnabe verbunden ist und der Antriebswellenaufnahmeabschnitt eine Innenverzahnung zum Verbinden mit einer korrespondierend ausgebildeten Außenverzahnung einer Antriebswelle eines Fahrzeuges aufweist und die Kupplungsnabe kopplungsseitig einen napfförmigen Kopplungsabschnitt mit einer Innenverzahnung zum Verbinden mit einem korrespondierend ausgebildeten Element der anbaugeräteseitige Antriebswellenverbindungseinrichtung aufweist.

9. Anbaugeräteseitige Antriebswellenverbindungseinrichtung für eine Antriebswellenverbindungsvorrichtung nach einem der Ansprüche 1 bis 7,
**dadurch gekennzeichnet,**
**dass** sie einen napfförmigen Lagersitz, ein Kuppelstück und eine Lagerungswelle umfasst, wobei der Lagersitz einen in etwa kreisringförmigen Verbindungsmittelabschnitt zum Verbinden der anbaugeräteseitigen Antriebswellenverbindungseinrichtung mit einer Kopplungseinrichtung oder mit einem Anbaugerät aufweist und wobei in einer Durchgangsöffnung an einem anbaugeräteseitigen Ende der Lagerungseinrichtung ein Lageraufnahmeabschnitt ausgebildet ist, der anbaugeräteseitig von einer radial umlaufenden Schulter begrenzt ist und im Lageraufnahmeabschnitt einer Lagerungseinrichtung angeordnet ist, wobei in der Lagerungseinrichtung die Lagerungswelle drehbar gelagert ist, die mit einem an ihrer äußeren Mantelwandung ausgebildeten Lagerabschnitt mit der Lagerungseinrichtung verbunden ist, und wobei die Lagerungswelle anbaugeräteseitig einen Wellenstumpf mit einer Außenverzahnung zum Verbinden mit einer Antriebswelle eines Anbaugerätes aufweist, und wobei die Lagerungswelle kopplungsseitig eine napfförmige Kuppelstückaufnahme aufweist, wobei die napfförmige Kuppelstückaufnahme an ihrer äußeren Mantelwandung eine radial umlaufende Schulter aufweist, die den Lageraufnahmeabschnitt begrenzt, und wobei das Kuppelstück in der napfförmigen Kuppelstückaufnahme der Lagerungswelle angeordnet und mittels einer Schraubenverbindung fixiert ist, und wobei das in etwa zylindrische Kuppelstück kopplungsseitig eine Außenverzahnung zum Koppeln mit der korrespondierend ausgebildeten Innenverzahnung der Kupplungsnabe aufweist.

10. Antriebswellenverbindungseinrichtung gemäß Anspruch 8 oder 9,
**dadurch gekennzeichnet,**
**dass** zwischen den Lagerungseinrichtungen und den entsprechenden Schultern in den Lageraufnahmeabschnitten Tellerfedern vorgesehen sind, um die Lagerungseinrichtungen vor Beschädigungen zu schützen.

11. Antriebswellenverbindungseinrichtung gemäß Anspruch 8,
**dadurch gekennzeichnet,**
**dass** zwischen der Lagerungseinrichtung und dem Abschlussdeckel der fahrzeugseitigen Antriebswellenverbindungseinrichtung Wellendichtringe angeordnet sind.

12. Antriebswellenverbindungseinrichtung gemäß Anspruch 9,
**dadurch gekennzeichnet,**
**dass** Wellendichtringe zwischen der napfförmigen Lagerungswelle und dem Lagersitz der anbaugeräteseitigen Antriebswellenverbindungseinrichtung vorgesehen sind.

13. Fahrzeug mit einer Antriebswellenverbindungseinrichtung nach einem der Ansprüche 1 bis 8.

14. Anbaugerät, Zusatzachse oder Anhänger mit einer Antriebswellenverbindungsvorrichtung nach einem der Ansprüche 1 bis 7 und insbesondere einer Antriebswellenverbindungseinrichtung nach Anspruch 9.

## Claims

1. A drive shaft connecting device with pieces of drive shaft connecting equipment at each of both the vehicle end and the attachment end, wherein the pieces of drive shaft connecting equipment of the drive shaft connecting device are respectively provided for on a device for coupling a vehicle and an attachment device, such as a trailer, an additional axle or an attachment, and wherein the pieces of the drive shaft connecting equipment are connected with the coupling devices, fastened axially in such a way that, when the vehicle is mechanically connected with an additional axle or a trailer or attachment, the pieces of drive shaft connecting equipment are forcibly coupled with one another, **characterised in that**
the drive shaft connecting equipment at the vehicle end (201) has a bearing seat (203) and a clutch hub (204) mounted rotatably therein, wherein the clutch hub (204) has a bowl-shaped, hollow cylindrical coupling section (222) with an internal gear (223) for connecting with a coupling piece (225) of drive shaft connecting equipment (202), and
the drive shaft connection (202) at the attachment end has a bowl-shaped bearing seat (224), a coupling piece (225) and a support shaft (226), wherein the cylindrical coupling piece (225) has an external gear (240) for coupling with the correspondingly designed internal gear (223) of the clutch hub (204) at the coupling end, and
the support shaft (226) has a bowl-shaped, hollow cylindrical coupling piece receptacle (236) at the coupling end, wherein the coupling piece (225) is to be found in a bowl-shaped coupling piece receptacle (236) of the support shaft (226), and is fixed by means of a screw joint 239.

2. The drive shaft connecting device in accordance with Claim 1, **characterised in that** a radially encircling groove (242), in which the external gear (240) is divided into an external gear (240) at the coupling end and an external gear (242) which rests in the hollow cylindrical coupling piece receptacle (236), and in a corresponding internal gear (243) there, is inserted approximately axially centred over the coupling piece (225).

3. The drive shaft connecting device in accordance with Claim 1, **characterised in that,** in an assembled state of the coupling piece (225), the axial groove (242) abuts an axial end wall of the coupling piece receptacle (236) within the coupling piece receptacle (236).

4. The drive shaft connecting device in accordance with Claim 1,
**characterised in that**
the connecting pieces of equipment are fastened to the respective coupling element in such a way that, when the coupling elements engage with one another, the parts are forcibly connected, wherein an internal gear of a connecting piece of equipment engages coaxially with the external gear of another connecting piece of equipment in such a way that force-locking coupling results, due to the axial insertion of the coupling elements into one another.

5. The drive shaft connecting device in accordance with one of the foregoing claims,
**characterised in that**
the axial fastening of the pieces of drive shaft connecting equipment is produced by the mechanical connection of the coupling elements.

6. The drive shaft connecting device in accordance with one of the foregoing claims,
**characterised in that**
the bearing seats (203, 224) are a component of the respective pieces of drive shaft connecting equipment, and are each connected with a docking receptacle (31, 32) of a vehicle or an attachment by means of a screw joint or a welding connection or another fastening connection.

7. The drive shaft connecting device in accordance with one of the foregoing claims,
**characterised in that**
an external gear (240) of the coupling piece (225), on the one hand, and the internal gear (223) of the hollow cylindrical coupling section (222) of the clutch hub (204) corresponding with it, on the other hand, are designed in such a way that the gears or teeth axially come into contact with the end faces at the coupling end, or are designed with steep-angled converging flanks in such a way that the respective teeth form locating funnels for the corresponding gears, so that an internal gear or the external gear can slide along on the sloping flanks or chamfers when they are coupled, in such a way that the gears turn inside one another and can slide into one another.

8. The piece of drive shaft connecting equipment of a drive shaft connecting device at the vehicle end, in accordance with one of the foregoing claims,
**characterised in that**
it comprises a bearing seat and a clutch hub mounted rotatably therein, wherein the bearing seat is designed in two parts and has a connecting flange at the vehicle end and an end cap at the coupling end, wherein the tubular connecting flange has a fastening section and a mounting section, and the fastening section at the vehicle end has an external casing wall radially encircling a centring shoulder for centring the piece of drive shaft connecting equipment at the vehicle end in regard to a coupling device or a vehicle, and a somewhat annular connecting central section for connecting the piece of drive shaft connecting equipment at the vehicle end with a coupling device or a vehicle, and wherein the fastening section forms a part of a bearing receptacle seat at the coupling end, which has a radially encircling shoulder, and wherein the end cap is connected with the connecting flange by means of a corresponding connecting means, wherein the end cap forms a part of a bearing receptacle seat at the vehicle end, which has a radially encircling shoulder and a through opening for the clutch hub at the coupling end, and wherein a bearing device, via which the clutch hub is rotatably mounted in the bearing seat, is to be found in the bearing receptacle seat, and the bearing device is connected with a casing wall of a tubular drive shaft receptacle section of the clutch hub at the vehicle end, and the drive shaft receptacle section has an internal gear for connection with a correspondingly designed external gear of a drive shaft of a vehicle, and the clutch hub has, at the coupling end, a bowl-shaped coupling section with an internal gear for connecting with a correspondingly designed element of the piece of drive shaft connecting equipment at the attachment end.

9. A piece of drive shaft connecting equipment at the attachment end, for a drive shaft connecting device in accordance with one of Claims 1 to 7,
**characterised in that**
it comprises a bowl-shaped bearing seat, a coupling piece and a support shaft, wherein the bearing seat has an approximately annular connecting means section for connecting the piece of drive shaft connecting equipment with a coupling device or with an attachment at the attachment end, and wherein a bearing receptacle section which is delimited, at the attachment end, by a radially encircling shoulder, and is located in the bearing receptacle section of a bearing device, is designed in a through opening at an attachment end of the bearing device, wherein the bearing shaft, which is connected with a bearing section provided for on its external casing wall, is rotatably mounted in the bearing device, and wherein the bearing shaft has, at the attachment end, a shaft end with an external gear for connecting with a drive shaft of an attachment, and wherein the bearing shaft has a bowl-shaped coupling piece receptacle at the coupling end, wherein the bowl-shaped coupling piece receptacle has a radially encircling shoulder on its external casing wall, which delimits the bearing receptacle section, and wherein the coupling piece is to be found in the bowl-shaped coupling piece receptacle of the bearing shaft, and fixed by means of a screw joint, and wherein said approximately cylindrical coupling piece has an external gear for coupling with the correspondingly designed internal gear of the clutch hub at the coupling end.

10. The piece of drive shaft connecting equipment in accordance with Claim 8 or 9,
**characterised in that**
disc springs are provided for between the bearing devices and the corresponding shoulders in the bearing receptacle sections, in order to protect the bearing devices from being damaged.

11. The piece of drive shaft connecting equipment in accordance with Claim 8,
**characterised in that**
shaft sealing rings are placed between the bearing device and the end cap of the piece of drive shaft connecting equipment at the vehicle end.

12. The piece of drive shaft connecting equipment in accordance with Claim 9,
**characterised in that**
shaft sealing rings are provided for between the bowl-shaped support shaft and the bearing seat of the piece of drive shaft connecting equipment at the attachment end.

13. A vehicle with a piece of drive shaft connecting equipment in accordance with one of Claims 1 to 8.

14. An attachment, additional axle or trailer with a drive shaft connecting device in accordance with one of Claims 1 to 7, and in particular a piece of drive shaft connecting equipment in accordance with Claim 9.

## Revendications

1. Dispositif de liaison d'arbre de transmission comprenant un mécanisme de liaison d'arbre de transmission côté véhicule et un mécanisme de liaison d'arbre de transmission côté appareil rapporté, les mécanismes de liaison d'arbre de transmission du dispositif de liaison d'arbre de transmission étant prévus sur un mécanisme de couplage d'un véhicule et sur un mécanisme rapporté tel qu'une remorque, un essieu additionnel ou un appareil rapporté et les mécanismes de liaison d'arbre de transmission étant reliés axialement avec les mécanismes de couplage de telle sorte que, en cas d'accouplement mécanique du véhicule avec un essieu additionnel ou une remorque ou un appareil rapporté, les mécanismes de liaison d'arbre de transmission sont asservis entre eux, **caractérisé en ce que**
un mécanisme de liaison d'arbre de transmission (201) côté véhicule est équipé d'un siège de palier (203) et d'un moyeu d'accouplement (204) logé de manière à pouvoir pivoter dans celui-ci, le moyeu d'accouplement (204) présentant une partie d'accouplement cylindrique creuse (222) en forme de godet pourvue d'un engrenage intérieur (223) destiné à la liaison avec une pièce d'accouplement (225) d'un mécanisme de liaison d'arbre de transmission (202) et que
la liaison d'arbre de transmission (202) côté appareil rapporté est équipée d'un siège de palier en forme de godet (224), d'une pièce d'accouplement (225) et d'un arbre de support (226), la pièce d'accouplement (225) cylindrique étant équipée coté accouplement d'un engrenage extérieur (240) destiné au couplage avec l'engrenage intérieur (223) conçu de manière correspondante du moyeu d'accouplement (204) et que
l'arbre de support (226) présente du côté accouplement un logement de pièce d'accouplement cylindrique creux en forme de godet (236), la pièce d'accouplement (225) étant disposée dans un logement de pièce d'accouplement en forme de godet (236) de l'arbre de support (226) et fixée au moyen d'un raccord vissé 239.

2. Dispositif de liaison d'arbre de transmission selon la revendication 1, **caractérisé en ce qu'**une rainure radiale périphérique (242) est intégrée axialement à peu près au milieu de la pièce d'accouplement (225), dont l'engrenage extérieur (240) est divisé en un engrenage extérieur côté accouplement (240) et un engrenage extérieur (242) reposant dans un engrenage intérieur (243) correspondant dans le logement de pièce d'accouplement cylindrique creux (236).

3. Dispositif de liaison d'arbre de transmission selon la revendication 1, **caractérisé en ce que** la rainure axiale (242) se termine, en état monté de la pièce d'accouplement (225) dans le logement de pièce d'accouplement (236), par une paroi frontale axiale du logement de pièce d'accouplement (236).

4. Dispositif de liaison d'arbre de transmission selon la revendication 1, **caractérisé en ce**
**que** les mécanismes de liaison sont fixés à l'élément d'accouplement respectif de telle sorte que les pièces sont asservies lors de l'emboîtement des éléments d'accouplement, un engrenage intérieur d'un mécanisme de liaison s'engageant de manière coaxiale dans l'engrenage extérieur d'un autre mécanisme de liaison de manière à réaliser le couplage à force par l'emboîtement axial.

5. Dispositif de liaison d'arbre de transmission selon l'une des revendications précédentes, **caractérisé en ce**
**que** la fixation axiale des mécanismes de liaison d'arbre de transmission a lieu par la liaison mécanique des éléments d'accouplement.

6. Dispositif de liaison d'arbre de transmission selon l'une des revendications précédentes, **caractérisé en ce**
**que** les sièges de palier (203, 224) font partie du mécanisme de liaison d'arbre de transmission respectif et sont reliés chacun avec un logement de connexion (31, 32) d'un véhicule ou d'un appareil rapporté au moyen d'un raccord vissé ou d'un raccord soudé ou d'une autre liaison de fixation.

7. Dispositif de liaison d'arbre de transmission selon l'une des revendications précédentes, **caractérisé en ce**
**qu'**un engrenage extérieur (240) de la pièce d'accouplement (225) d'un côté et l'engrenage intérieur (223) correspondant de la partie d'accouplement cylindrique creuse (222) du moyeu d'accouplement (204) de l'autre côté sont conçus de telle sorte que les engrenages ou les dents sont chanfreinés axialement par rapport aux surfaces frontales côté accouplement ou sont conçus avec des flancs convergents très chanfreinés, de telle sorte que les dents forment un entonnoir de repérage respectif pour l'engrenage correspondant de manière à permettre à un engrenage intérieur ou à l'engrenage extérieur de glisser le long des flancs chanfreinés ou chanfreins lors du couplage de manière à permettre aux engrenages de tourner l'un dans l'autre et de glisser l'un dans l'autre.

8. Mécanisme de liaison d'arbre de transmission côté véhicule d'un dispositif de liaison d'arbre de transmission selon l'une des revendications précédentes,
**caractérisé en ce**
**qu'**il comprend un siège de palier et un moyeu d'accouplement logé de manière à pouvoir pivoter dans celui-ci, le siège de palier étant réalisé en deux parties et présentant une bride de liaison côté véhicule et un couvercle de fermeture côté accouplement et la bride de liaison en forme de tube présentant une partie de fixation et une partie de support et la partie de fixation présentant côté véhicule sur une paroi enveloppante extérieure radialement périphérique un collier de centrage destiné à centrer le mécanisme de liaison d'arbre de transmission côté véhicule par rapport à un mécanisme d'accouplement ou à un véhicule et une partie de moyen de liaison circulaire destinée à relier le mécanisme de liaison d'arbre de transmission côté véhicule avec un mécanisme d'accouplement ou avec un véhicule et la partie de fixation formant côté accouplement une partie d'un siège de logement de support présentant un collier périphérique radial et le couvercle de fermeture étant relié à la bride de liaison à l'aide des moyens de liaison correspondants et le couvercle de fermeture formant une pièce côté véhicule d'un siège de logement de support présentant un collier périphérique radial et une ouverture de passage côté accouplement pour le moyeu d'accouplement et un mécanisme de support étant disposé dans le siège de logement de support sur lequel est logé de manière à pouvoir pivoter le moyeu d'accouplement dans le siège de palier et le mécanisme de support étant relié à une paroi enveloppante d'une partie de logement d'arbre de transmission en forme de tube côté véhicule du moyeu d'accouplement et la partie de logement d'arbre de transmission présentant un engrenage intérieur destiné à être relié à un engrenage extérieur réalisé de manière correspondante d'un arbre de transmission d'un véhicule et le moyeu d'accouplement présentant du côté accouplement une partie d'accouplement en forme de godet avec un engrenage intérieur destiné à être relié à un élément réalisé de manière correspondante du mécanisme de liaison d'arbre de transmission côté appareil rapporté.

9. Mécanisme de liaison d'arbre de transmission côté appareil rapporté destiné à un dispositif de liaison d'arbre de transmission selon l'une des revendications 1 à 7,
**caractérisé en ce**
**qu'**il comprend un siège de palier en forme de godet, une pièce d'accouplement et un arbre de support, le siège de palier présentant une partie de moyen de liaison à peu près circulaire destinée à relier le mécanisme de liaison d'arbre de transmission côté appareil rapporté avec un mécanisme d'accouplement ou un appareil rapporté et une partie de logement de support étant réalisée dans une ouverture de passage sur une extrémité côté appareil rapporté du mécanisme de support, qui est limité du côté appareil rapporté par un collier périphérique radial et est disposé dans la partie de logement de support d'un mécanisme de support, l'arbre de support étant logé de manière à pouvoir pivoter dans le mécanisme de support, qui est relié par une partie de palier réalisée sur sa paroi enveloppante extérieure avec le mécanisme de support et l'arbre de support présentant côté appareil rapporté un bout d'arbre avec un engrenage extérieur destiné à être relié avec un arbre de transmission d'un appareil rapporté et l'arbre de support présentant côté accouplement un logement de pièce d'accouplement en forme de godet, le logement de pièce d'accouplement en forme de godet présentant sur sa paroi enveloppante extérieure un collier périphérique radial limitant la partie le logement de palier et la pièce d'accouplement étant disposée dans le logement de pièce d'accouplement en forme de godet de l'arbre de support et fixée au moyen d'un raccord vissé et la pièce d'accouplement à peu près cylindrique présentant côté accouplement un engrenage extérieur destiné à être couplé avec l'engrenage intérieur réalisé de manière correspondante du moyeu d'accouplement.

10. Mécanisme de liaison d'arbre de transmission selon la revendication 8 ou 9, **caractérisé en ce**
**que** des ressorts à disque sont prévus entre les mécanismes de support et les colliers correspondants dans les parties de logement de palier pour protéger les mécanismes de support contre toute détérioration.

11. Mécanisme de liaison d'arbre de transmission selon la revendication 8, **caractérisé en ce**
**que** des joints à lèvre sont disposés entre le mécanisme de support et le couvercle de fermeture du mécanisme de liaison d'arbre de transmission côté véhicule.

12. Mécanisme de liaison d'arbre de transmission selon la revendication 9, **caractérisé en ce**
**que** des joints à lèvre sont prévus entre l'arbre de support en forme de godet et le siège de palier du mécanisme de liaison d'arbre de transmission côté appareil rapporté.

13. Véhicule comprenant un mécanisme de liaison d'arbre de transmission selon l'une des revendications 1 à 8.

14. Appareil rapporté, essieu additionnel ou remorque comprenant un dispositif de liaison d'arbre de transmission selon l'une des revendications 1 à 7 et en particulier un mécanisme de liaison d'arbre de transmission selon la revendication 9.
